# EUROPEAN PATENT SPECIFICATION

(11) **EP 4 004 249 B1**
(45) Date of publication and mention of the grant of the patent: **01.04.2026**
(21) Application number: 20761891.9
(22) Date of filing: 23.07.2020
(51) Int. Cl.: C22C 37/08, C22C 37/10, C22C 38/00, C22C 38/02, C22C 38/04, C22C 38/08, C22C 38/12, C22C 38/14, C22C 38/22, C22C 38/28, C22C 38/34, C22C 38/36, C22C 38/40, C22C 38/44, F16D 65/12, C22C 38/50, C22C 38/56, C22C 38/58, F16D 55/00

(54) **CAST IRON, IN PARTICULAR FOR COMPONENTS OF DISC BRAKES**
GUSSEISEN, INSBESONDERE FÜR KOMPONENTEN VON SCHEIBENBREMSEN
FONTE, EN PARTICULIER POUR LES COMPOSANTS DES FREINS À DISQUE

(30) Priority: 24.07.2019 IT 201900012738
(43) Date of publication of application: 01.06.2022
(73) Proprietor: Brembo S.p.A., 24035 Curno (Bergamo) (IT)
(72) Inventor: DUDZIK, Bozena, 24035 Curno, Bergamo (IT); BIERONSKI, Mariusz, 24035 Curno, Bergamo (IT); CARMINATI, Fabiano, 24035 Curno, Bergamo (IT)
(74) Representative: Zanettin, Gianluigi
(86) International application number: PCT/IB2020/056968
(87) International publication number: WO 2021/014404

(56) References cited:
- EP-A2- 0 693 336
- CN-B- 103 572 149
- CN-B- 104 195 423
- JP-A- S60 138 051

## Description

### FIELD OF APPLICATION

The present invention relates to a cast iron, in particular for making a brake disc, and to a brake disc for a disc brake made with said cast iron.

### BACKGROUND ART

As known, brake discs made of gray cast iron are subject to wear at the braking bands over time. Inevitably, such phenomena affect the duration of the discs.

Therefore, the need to manufacture brake discs made of cast iron which have high wear resistance is greatly felt in the automotive field, and in particular for high-performance vehicles.

An increased wear resistance thus results in a reduction of metal powders being released into the environment.

However, the increased wear resistance in discs made of gray cast iron must be achieved taking into account the mechanical and thermal stresses of high intensity to which the brake discs are subjected. Such stresses result in the attainment of high temperatures on the braking bands, which can result in decreases in the braking performance, and even in the formation of cracks on the braking band.

The need is also felt for brake discs made of gray cast iron to have high corrosion resistance so as to increase the duration thereof. Therefore, increased wear resistance must not have a negative impact on the corrosion resistance.

In the art, gray cast iron solutions capable of simultaneously combining high wear resistance with high performance in terms of mechanical resistance, heat resistance, and corrosion resistance are not known. A grey cast iron brake disc is known from EP 0 693 336 A2.

### PRESENTATION OF THE INVENTION

It is the object of the present invention to provide a gray cast iron which overcomes the drawbacks stated with reference to the prior art.

Such drawbacks are overcome by a gray cast iron according to claim 1.

Other embodiments of the cast iron according to the invention are described in the following claims.

Further features and advantages of the present invention will become more apparent from the description given below of preferred, non-limiting embodiments thereof.

### DETAILED DESCRIPTION

According to a general embodiment, the gray cast iron of the present invention comprises in the alloy: carbon, silicon, vanadium, manganese, nickel, chromium, molybdenum, copper, sulfur, phosphorous, tin and titanium as defined in the claims.

Such alloying elements are contained in the cast iron with the following ranges of percentage by weight on the total weight of the cast iron:
- carbon from 3.70 to 3.90% by weight,
- silicon from 1.30 to 2.10% by weight,
- vanadium from 0.10 to 0.15% by weight,
- manganese from 0.60 to 0.90% by weight,
- nickel from 0.05 to 0.50% by weight,
- chromium from 0.20 to 0.35% by weight,
- molybdenum no more than 0.10% by weight,
- copper no more than 0.35% by weight,
- sulfur less than 0.10% by weight,
- phosphorus less than 0.10% by weight,
- tin less than 0.10% by weight,
- titanium no more than 0.01% by weight, comprising optionally tungsten, with the weight percentage between 0.10 and 0.14%, the remainder by weight being iron.

Preferably, the percentage by weight of carbon is from 3.70, 3.86%,

Preferably, the percentage by weight of silicon is from 1.40 to 2.08%,

Preferably, the percentage by weight of vanadium is from 0.12 to 0.14%,

Preferably, the percentage by weight of manganese is from 0.63 to 0.85%,

Preferably, the percentage by weight of nickel is from 0.06 to 0.47%.

Preferably, the percentage by weight of chromium is from 0.21 to 0.35%,

Preferably, the percentage by weight of copper is from 0.19 to 0.35%,

Preferably, the percentage by weight of tin is no more than 0.09%,

Preferably, the percentage by weight of titanium is from 0.0079 to 0.01%.

According to a first preferred embodiment, the gray cast iron has the following composition:
- 3.86% by weight carbon;
- 1.85% by weight silicon;
- 0.12% by weight vanadium;
- 0.63% by weight manganese;
- 0.06% by weight nickel;
- 0.21% by weight chromium;
- 0.002% by weight molybdenum;
- 0.19% by weight copper;
- 0.065% by weight sulfur;
- 0.04% by weight phosphorous;
- 0.023% by weight tin;
- 0.0079% by weight titanium;
the remainder by weight being iron.

According to a second preferred embodiment, the gray cast iron has the following composition:
- 3.70% by weight carbon;
- 2.08% by weight silicon;
- 0.12% by weight vanadium;
- 0.658% by weight manganese;
- 0.47% by weight nickel;
- 0.255% by weight chromium;
- 0.0312% by weight molybdenum;
- 0.238% by weight copper;
- 0.0463% by weight sulfur;
- 0.031% by weight phosphorous;
- 0.038% by weight tin;
- 0.01% by weight titanium;
the remainder by weight being iron.

Advantageously, the gray cast iron can comprise tungsten, with a percentage by weight equal tc 0.12%.

According to a third particularly preferred embodiment, the gray cast iron has the following composition:
- 3.75% by weight carbon,
- 1.40% by weight silicon,
- 0.14% by weight vanadium;
- 0.12% by weight tungsten,
- 0.85% by weight manganese,
- 0.1% by weight nickel,
- 0.35% by weight chrome,
- 0.1% by weight molybdenum,
- 0.35% by weight copper,
- <0.1% by weight sulfur,
- <0.1% by weight phosphorous,
- 0.09% by weight tin,
- 0.01% by weight titanium
the remainder by weight being iron.

The ferrous matrix of the cast iron is of the pearlite or fine lamellar type. In the invention, the percentage by weight of pearlite on the weight of the ferrous matrix is no less than 95%.

The gray cast iron comprises ferrite with a percentage by weight of less than 5% on the weight of the ferrous matrix. Even more preferably, the percentage by weight of ferrite on the weight of the ferrous matrix is equal to 1%.

The gray cast iron comprises cementite and free carbides with a percentage by weight of no more than 1% on the weight of the ferrous matrix.

Advantageously, the cast iron of the present invention can be used to produce components of disc brakes.

For example, the cast iron can be used to produce at least one braking band of a brake disc for a disc brake of any type.

Experimental wear tests have been carried out, comparing a brake disc made of a gray cast iron of a standard composition to three brake discs made of three cast irons, having three different compositions falling within the present invention.

### COMPARATIVE EXAMPLE

A brake disc was obtained with a gray cast iron having the following composition: 3.74 by weight carbon; 1.65% by weight silicon; 0.55% by weight manganese; 0.1% by weight nickel; 0.15% by weight chromium; 0.1% by weight molybdenum; 0.2% by weight copper;< 0.1% by weight sulfur; <0.08% by weight phosphorus; 0.023% by weight tin; 0.09% by weight titanium; the remainder by weight being iron.

The ferrous matrix consists of 1% by weight ferrite, 98.5% by weight pearlite and 0.5% by weight carbides.

The brake disc made of such a gray cast iron will be referred to as COMPARATIVE DISC below.

### EXAMPLE 1

A first brake disc was obtained, identical to the comparative disc, but using a gray cast iron according to the invention, having the following first composition: 3.86% by weight carbon; 1.85 by weight silicon; 0.12% by weight vanadium; 0.63% by weight manganese; 0.06% by weight nickel; 0.21% by weight chromium; 0.002% by weight molybdenum; 0.19% by weight copper; 0.065% by weight sulfur; 0.04% by weight phosphorus; 0.023% by weight tin; 0.0079% by weight titanium; the remainder by weight being iron.

The ferrous matrix consists of 1% by weight ferrite, 98% by weight pearlite and 1% by weight carbides.

The brake disc made of such a gray cast iron will be referred to as DISC 1 below.

### EXAMPLE 2

A second brake disc was obtained, identical to the comparative disc, but using a gray cast iron according to the invention, having the following second composition: 3.70% by weight carbon; 2.08% by weight silicon; 0.12% by weight vanadium; 0.658% by weight manganese; 0.47% by weight nickel; 0.255% by weight chromium; 0.0312% by weight molybdenum; 0.238% by weight copper; 0.0463% by weight sulfur; 0.031% by weight phosphorus; 0.038% by weight tin; 0.01% by weight titanium; the remainder by weight being iron.

The ferrous matrix consists of 1% by weight ferrite, 98% by weight pearlite and 1% by weight carbides.

The brake disc made of such a gray cast iron will be referred to as DISC 2 below.

### EXAMPLE 3

A third brake disc was obtained, identical to the comparative disc, but using a gray cast iron according to the invention, having the following third composition: 3.75% by weight carbon; 1.40% by weight silicon; 0.14% by weight vanadium; 0.12% by weight tungsten; 0.85% by weight manganese; 0.1% by weight nickel; 0.35% by weight chromium; 0.1% by weight molybdenum; 0.35% by weight copper; <0.1% by weight sulfur; <0.1% by weight phosphorus; 0.09% by weight tin and 0.01% by weight titanium; the remainder by weight being iron.

The ferrous matrix consists of about 1% by weight ferrite, 97.5% by weight pearlite and <1% by weight carbides.

The brake disc made of such a gray cast iron will be referred to as DISC 3 below.

### EXPERIMENTAL TESTS

The comparative brake disc and the three brake discs according to the invention (DISC 1, 2 and 3) were subjected to five repetitions of a well-known technical test in the field of braking systems. At the end of such a test, it emerged that the reduction in weight loss of the three discs is from 50÷55% as compared to the reference disc.

It emerges from such tests that, under equal conditions, the brake discs according to the invention (disc 1, 2 and 3) experienced a significantly smaller weight loss than that experienced by the comparative disc. On average, the brake discs according to the invention (disc 1, 2 and 3) had a weight loss of less than 50% as compared to that of the comparative disc.

This means that the gray cast irons according to the invention offer a greater wear resistance than the standard gray cast iron taken as reference.

From an analysis of the test results, it also emerges that disc 3 had a more marked reduction in weight loss than the comparative disc. From this it follows that the gray cast iron used to make such a disc 3 allows to obtain a more marked wear resistance.

The same brake discs (comparative disc, disc 1, disc 2 and disc 3) were further characterized from a mechanical point of view and of the functional parameters. The results are shown in Table 1:

**Table 1**

| | COMPARATIVE DISC | DISC 1 | DISC 2 | DISC 3 |
|---|---|---|---|---|
| Tensile strength Rm [MPa] | 190 | 182 | 165 | 273 |
| Hardness [HBW] | 180-186 | 187-190 | 183-185 | 234 |
| Density [kg/dm³] | 7.1 | 7.1 | 7.1 | 7.3 |
| Corrosion [%loss by weight] | 0.29 | 0.21 | 0.23 | 0.17 |

From a comparison of the data shown in Table 1, it emerges that, in terms of mechanical resistance, heat resistance and corrosion resistance, the performance of discs 1, 2 and 3 is substantially comparable to that of the brake disc created using a standard gray cast iron.

All this is also indirectly confirmed by the fact that, with respect to the standard gray cast iron used to make the comparative disc, the gray cast iron according to the invention does not involve any significant change in the percentages by weight of carbon (graphite), silicon, and in the sum of the percentages by weight of chromium and molybdenum.

The large amount of carbon (graphite) ensures that the cast iron according to the invention has a high thermal conductivity, which allows a high heat exchange during the braking shocks. Thereby, the risk of cracking due to thermal stress is significantly reduced, even after a heavy use of the braking system. The cast iron of the present invention also has a high damping capacity which contributes to increasing the resistance to the formation and spreading of cracks.

Due to the percentages of silicon included in the cast iron of the present invention, a graphitizing effect is achieved, preventing the formation of cementite and carbides.

Furthermore, chromium and molybdenum stabilize the formation of lamellar pearlite in the metal matrix.

At the end of the five repetitions of the standard test used during the design of suitable brake discs for the braking systems, the weight losses of the pads used in association with the comparative disc and with discs 1,2 and 3 were then also measured.

From a data comparison, it emerges that discs 1, 2 and 3 cause a wear on the pads, which is substantially comparable to that caused by the comparative disc. Thus, the increase in the wear resistance does not cause an increase in the wear of the pads associated with the disc made using the cast iron according to the invention.

As can be appreciated from the description, the gray cast iron of the present invention allows the drawbacks presented in the prior art to be overcome.

In particular, the cast iron according to the present invention and the related brake discs made of said cast iron offer a significantly greater wear resistance than the standard gray cast iron, taken as reference. Such an increase does not result in a deterioration of mechanical resistance, heat resistance, and corrosion resistance.

In fact, the performance of brake discs made of the gray cast iron according to the invention is comparable to that of the brake disc made of a standard gray cast iron in terms of mechanical resistance, heat resistance, and corrosion resistance.

It also emerged that the increase in wear resistance ensured by the gray cast iron according to the invention does not significantly alter the wear of the pads either. In fact, from the data deriving from the weight losses, it emerges that the pads associated with discs 1, 2 and 3 were substantially worn in a similar manner (in terms of weight loss) to those associated with the comparative disc. In particular, compared to the comparative disc, there is indeed a reduction in the wear of the pads in the case of disc 3.

In order to meet specific, contingent needs, those skilled in the art can make several changes and variations to the cast irons and brake disc described above, all contained in the scope of the invention as defined by the following claims.

## Claims

1. Grey cast iron comprising carbon, silicon, vanadium, manganese, nickel, chromium, molybdenum, copper, sulphur, phosphorus, tin and titanium, wherein
- the percentage by weight of carbon is from 3.70, 3.90%,
- the percentage by weight of silicon is from 1.30 to 2.10%,
- the percentage by weight of vanadium is from 0.10 to 0.15%,
- the percentage by weight of manganese is from 0.60 to 0.90%,
- the percentage by weight of nickel is from 0.05 to 0.50%,
- the percentage by weight of chromium is from 0.20 to 0.35%,
- the percentage by weight of molybdenum is not higher than 0.10%,
- the percentage by weight of copper is not higher than 0.35%,
- the percentage by weight of sulphur is lower than 0.10%,
- the percentage by weight of phosphorus is lower than 0.10%,
- the percentage by weight of tin is lower than 0.10%,
- the percentage by weight of titanium is lower than 0.01%,
comprising optionally tungsten, with the weight percentage between 0.10 and 0.14%,
the remainder by weight being constituted of iron,
wherein the matrix of said cast iron is pearlitic, or fine lamellar, the percentage by weight of perlite on the weight of the ferrous matrix being not lower than 95%, said grey cast iron further comprising ferrite in a percentage by weight lower than 5% on the weight of the ferrous matrix, and cementite and free carbides with a percentage by weight not higher than 1% on the weight of the ferrous matrix.

2. The cast iron according to claim 1 or 2, wherein the percentage by weight of carbon is from 3.70 to 3.86%.

3. The cast iron according to claim 1, 2 or 3, wherein the percentage by weight of silicon is from 1.40 to 2.08%.

4. The cast iron according to one or more of the preceding claims, wherein the percentage by weight of vanadium is between 0.12 and 0.14%.

5. The cast iron according to one or more of the preceding claims, wherein the percentage by weight of manganese is from 0.63 to 0.85.

6. The cast iron according to one or more of the preceding claims, wherein the percentage by weight of nickel is between 0.06 and 0.47%.

7. The cast iron according to one or more of the preceding claims, wherein the percentage by weight of chromium is between 0.21 and 0.35%.

8. The cast iron according to one or more of the preceding claims, wherein the percentage by weight of copper is between 0.19 and 0.35%.

9. The cast iron according to one or more of the preceding claims, wherein the percentage by weight of tin is not higher than 0.09%.

10. The cast iron according to one or more of the preceding claims, wherein the percentage by weight of titanium is between 0.0079 and 0.01%.

11. The cast iron according to one or more of the preceding claims, consisting of 3.86% by weight of carbon, 1.85% by weight of silicon, 0.12% by weight of vanadium, 0.63% by weight of manganese, 0.06% by weight of nickel, 0.21% by weight of chromium, 0.002% by weight of molybdenum, 0.19% by weight of copper, 0.065% by weight of sulphur, 0.04% by weight of phosphorus, 0.023% by weight of tin and 0.0079% by weight of titanium, the remainder by weight being iron.

12. The cast iron according to one or more of the claims from 1 to 10, consisting of 3.70% by weight of carbon, 2.08% by weight of silicon, 0.12% by weight of vanadium, 0.658% by weight of manganese, 0.47% by weight of nickel, 0.255% by weight of chromium, 0.0312% by weight of molybdenum, 0.238% by weight of copper, 0.0463% by weight of sulphur, 0.031% by weight of phosphorus, 0.038% by weight of tin and 0.01% by weight of titanium, the remainder by weight being iron.

13. The cast iron according to one or more of the claims from 1 to 10, wherein the weight percentage of tungsten is 0.12%.

14. The cast iron according to claim 13, consisting of 3.75% by weight of carbon, 1.40% by weight of silicon, 0.14% by weight of vanadium, 0.12% by weight of tungsten, 0.85% by weight of manganese, 0.1% by weight of nickel, 0.35% by weight of chromium, 0.1% by weight of molybdenum, 0.35% by weight of copper, <0.1% by weight of sulphur, <0.1% by weight of phosphorus, 0.09% by weight of tin and 0.01% by weight of titanium, the remainder by weight being iron.

15. The cast iron according to one or more of the preceding claims, wherein the percentage by weight of ferrite on the weight of the ferrous matrix is equal to 1%.

16. Brake disc for a disc brake comprising a braking surface made in a cast iron according to any of the preceding claims.

## Patentansprüche

1. Grauguss, umfassend Kohlenstoff, Silicium, Vanadium, Mangan, Nickel, Chrom, Molybdän, Kupfer, Schwefel, Phosphor, Zinn und Titan, wobei
- das Gewichtsprozent von Kohlenstoff zwischen 3,70 und 3,90% liegt,
- das Gewichtsprozent von Silicium zwischen 1,30 und 2,10% liegt,
- das Gewichtsprozent von Vanadium zwischen 0,10 und 0,15% liegt,
- das Gewichtsprozent von Mangan zwischen 0,60 und 0,90% liegt,
- das Gewichtsprozent von Nickel zwischen 0,05 und 0,50% liegt,
- das Gewichtsprozent von Chrom zwischen 0,20 und 0,35% liegt,
- das Gewichtsprozent von Molybdän nicht höher als 0,10% ist,
- das Gewichtsprozent von Kupfer nicht höher als 0,35% ist,
- das Gewichtsprozentsatz von Schwefel niedriger als 0,10% ist,
- das Gewichtsprozent von Phosphor niedriger als 0,10% ist,
- das Gewichtsprozent von Zinn niedriger als 0,10% ist,
- das Gewichtsprozent von Titan niedriger ist als 0,01%,
umfassend optional Wolfram mit einem Gewichtsprozent zwischen 0,10 und 0,14%,
wobei der Rest nach Gewicht aus Eisen besteht, wobei die Matrix des Gusseisens perlitisch ist oder feinlamellär ist, wobei das Gewichtsprozent von Perlit bezogen auf das Gewicht der eisenhaltigen Matrix nicht niedriger als 95% ist, wobei der Grauguss ferner Ferrit in einem Gewichtsprozent von weniger als 5% bezogen auf das Gewicht der eisenhaltigen Matrix umfasst, sowie Zementit und freie Karbide mit einem Gewichtsprozent nicht höher als 1% bezogen auf das Gewicht der eisenhaltigen Matrix.

2. Gusseisen nach Anspruch 1 oder 2, wobei das Gewichtsprozent von Kohlenstoff zwischen 3,70 und 3,86% liegt.

3. Gusseisen nach Anspruch 1, 2 oder 3, wobei das Gewichtsprozent von Silicium zwischen 1,40 und 2,08% liegt.

4. Gusseisen nach einem oder mehreren der vorhergehenden Ansprüche, wobei das Gewichtsprozent von Vanadium zwischen 0,12 und 0,14% liegt.

5. Gusseisen nach einem oder mehreren der vorhergehenden Ansprüche, wobei das Gewichtsprozent von Mangan zwischen 0,63 und 0,85 liegt.

6. Gusseisen nach einem oder mehreren der vorhergehenden Ansprüche, wobei das Gewichtsprozent von Nickel zwischen 0,06 und 0,47% liegt.

7. Gusseisen nach einem oder mehreren der vorhergehenden Ansprüche, wobei das Gewichtsprozent von Chrom zwischen 0,21 und 0,35% liegt.

8. Gusseisen nach einem oder mehreren der vorhergehenden Ansprüche, wobei das Gewichtsprozent von Kupfer zwischen 0,19 und 0,35% liegt.

9. Gusseisen nach einem oder mehreren der vorhergehenden Ansprüche, wobei das Gewichtsprozent von Zinn nicht höher als 0,09% ist.

10. Gusseisen nach einem oder mehreren der vorhergehenden Ansprüche, wobei das Gewichtsprozent von Titan zwischen 0,0079 und 0,01% liegt.

11. Gusseisen nach einem oder mehreren der vorhergehenden Ansprüche, bestehend aus 3,86 Gew.-% Kohlenstoff, 1,85 Gew.-% Silicium, 0,12 Gew.-% Vanadium, 0,63 Gew.-% Mangan, 0,06 Gew.-% Nickel, 0,21 Gew.-% Chrom, 0,002 Gew.-% Molybdän, 0,19 Gew.-% Kupfer, 0,065 Gew.-% Schwefel, 0,04 Gew.-% Phosphor, 0,023 Gew.-% Zinn und 0,0079 Gew.-% Titan, wobei der Rest nach Gewicht Eisen ist.

12. Gusseisen nach einem oder mehreren der Ansprüche 1 bis 10, bestehend aus 3,70 Gew.-% Kohlenstoff, 2,08 Gew.-% Silicium, 0,12 Gew.-% Vanadium, 0,658 Gew.-% Mangan, 0,47 Gew.-% Nickel, 0,255 Gew.-% Chrom, 0,0312 Gew.-% Molybdän, 0,238 Gew.-% Kupfer, 0,0463 Gew.-% Schwefel, 0,031 Gew.-% Phosphor, 0,038 Gew.-% Zinn und 0,01 Gew.-% Titan, wobei der Rest nach Gewicht Eisen ist.

13. Gusseisen nach einem oder mehreren der Ansprüche 1 bis 10, wobei das Gewichtsprozent von Wolfram 0,12% beträgt.

14. Gusseisen nach Anspruch 13, bestehend aus 3,75 Gew.-% Kohlenstoff, 1,40 Gew.-% Silicium, 0,14 Gew.-% Vanadium, 0,12 Gew.-% Wolfram, 0,85 Gew.-% Mangan, 0,1 Gew.-% Nickel, 0,35 Gew.-% Chrom, 0,1 Gew.-% Molybdän, 0,35 Gew.-% Kupfer, <0,1 Gew.-% Schwefel, <0,1 Gew.-% Phosphor, 0,09 Gew.-% Zinn und 0,01 Gew.-% Titan, wobei der Rest nach Gewicht Eisen ist.

15. Gusseisen nach einem oder mehreren der vorhergehenden Ansprüche, wobei das Gewichtsprozent von Ferrit bezogen auf das Gewicht der eisenhaltigen Matrix gleich 1% ist.

16. Bremsscheibe für eine Scheibenbremse, umfassend eine Bremsfläche, die aus einem Gusseisen nach einem der vorhergehenden Ansprüche hergestellt wird.

## Revendications

1. Fonte grise comprenant du carbone, du silicium, du vanadium, du manganèse, du nickel, du chrome, du molybdène, du cuivre, du soufre, du phosphore, de l'étain et du titane, dans laquelle
- le pourcentage en poids de carbone est compris entre 3.70 et 3.90%,
- le pourcentage en poids de silicium est compris entre 1.30 et 2.10%,
- le pourcentage en poids de vanadium est compris entre 0.10 et 0.15%,
- le pourcentage en poids de manganèse est compris entre 0.60 et 0.90%,
- le pourcentage en poids de nickel est compris entre 0.05 et 0.50%,
- le pourcentage en poids de chrome est compris entre 0.20 et 0.35%,
- le pourcentage en poids de molybdène n'est pas supérieur à 0.10%,
- le pourcentage en poids de cuivre n'est pas supérieur à 0.35%,
- le pourcentage en poids de soufre est inférieur à 0.10%,
- le pourcentage en poids de phosphore est inférieur à 0.10%,
- le pourcentage en poids d'étain est inférieur à 0.10%,
- le pourcentage en poids de titane est inférieur à 0.01%,
comprenant éventuellement du tungstène, avec un pourcentage en poids compris entre 0.10 et 0.14%,
le reste en poids étant constitué de fer, dans laquelle la matrice de ladite fonte est perlitique, ou finement lamellaire, le pourcentage en poids de perlite par rapport au poids de la matrice ferreuse n'étant pas inférieur à 95%, ladite fonte grise comprenant en outre de la ferrite dans un pourcentage en poids inférieur à 5% par rapport au poids de la matrice ferreuse, et de la cémentite et des carbures libres avec un pourcentage en poids n'excédant pas 1% par rapport au poids de la matrice ferreuse.

2. La fonte selon la revendication 1 ou 2, dans laquelle le pourcentage en poids de carbone est compris entre 3.70 et 3.86%.

3. La fonte selon la revendication 1, 2 ou 3, dans laquelle le pourcentage en poids de silicium est compris entre 1.40 et 2.08%.

4. La fonte selon une ou plusieurs des revendications précédentes, dans laquelle le pourcentage en poids de vanadium est compris entre 0.12 et 0.14%.

5. La fonte selon une ou plusieurs des revendications précédentes, dans laquelle le pourcentage en poids de manganèse est compris entre 0.63 et 0.85.

6. La fonte selon une ou plusieurs des revendications précédentes, dans laquelle le pourcentage en poids de nickel est compris entre 0.06 et 0.47%.

7. La fonte selon une ou plusieurs des revendications précédentes, dans laquelle le pourcentage en poids de chrome est compris entre 0.21 et 0.35%.

8. La fonte selon une ou plusieurs des revendications précédentes, dans laquelle le pourcentage en poids de cuivre est compris entre 0.19 et 0.35%.

9. La fonte selon une ou plusieurs des revendications précédentes, dans laquelle le pourcentage en poids d'étain n'est pas supérieur à 0.09%.

10. La fonte selon une ou plusieurs des revendications précédentes, dans laquelle le pourcentage en poids de titane est compris entre 0.0079 et 0.01%.

11. La fonte selon une ou plusieurs des revendications précédentes, consistant en 3.86% en poids de carbone, 1.85% en poids de silicium, 0.12% en poids de vanadium, 0.63% en poids de manganèse, 0.06% en poids de nickel, 0.21% en poids de chrome, 0.002% en poids de molybdène, 0.19% en poids de cuivre, 0.065% en poids de soufre, 0.04% en poids de phosphore, 0.023% en poids d'étain et 0.0079% en poids de titane, le reste en poids étant du fer.

12. La fonte selon une ou plusieurs des revendications de 1 à 10, consistant en 3.70% en poids de carbone, 2.08% en poids de silicium, 0.12% en poids de vanadium, 0.658% en poids de manganèse, 0.47% en poids de nickel, 0.255% en poids de chrome, 0.0312% en poids de molybdène, 0.238% en poids de cuivre, 0.0463% en poids de soufre, 0.031% en poids de phosphore, 0.038% en poids d'étain et 0.01% en poids de titane, le reste en poids étant du fer.

13. La fonte selon une ou plusieurs des revendications de 1 à 10, dans laquelle le pourcentage en poids de tungstène est de 0.12%.

14. La fonte selon la revendication 13, consistant en 3.75% en poids de carbone, 1.40% en poids de silicium, 0.14% en poids de vanadium, 0.12% en poids de tungstène, 0.85% en poids de manganèse, 0.1% en poids de nickel, 0.35% en poids de chrome, 0.1% en poids de molybdène, 0.35% en poids de cuivre, <0.1% en poids de soufre, <0.1% en poids de phosphore, 0.09% en poids d'étain et 0.01% en poids de titane, le reste en poids étant du fer.

15. La fonte selon une ou plusieurs des revendications précédentes, dans laquelle le pourcentage en poids de ferrite par rapport au poids de la matrice ferreuse est égal à 1%

16. Disque de frein pour un frein à disque comprenant une surface de freinage réalisée en une fonte selon l'une quelconque des revendications précédentes.
